# FASCICULE DE BREVET EUROPEEN

(11) **EP 0 870 119 B1**
(45) Date de publication et mention de la délivrance du brevet: **24.05.2000**
(21) Numéro de dépôt: 95941764.3
(22) Date de dépôt: 06.12.1995
(51) Int. Cl.: F16B 5/12

(54) **DISPOSITIF D'ASSEMBLAGE RAPIDE PAR CLIPPAGE**
SCHNELLE MONTAGEVORRICHTUNG MIT RASTVERRIEGELUNG
RAPID ASSEMBLY DEVICE BY CLIPPING

(30) Priorité: 09.12.1994 FR 9414820
(43) Date de publication de la demande: 14.10.1998
(73) Titulaire: Irgang, Günther, 77580 Crécy-la-Chapelle (FR)
(72) Inventeur: Irgang, Günther, 77580 Crécy-la-Chapelle (FR)
(86) Numéro de dépôt international: FR9501599
(87) Numéro de publication internationale: WO9618044

(56) Documents cités:
- EP-A- 0 437 959
- DE-A- 2 027 111
- DE-A- 2 136 108
- DE-U- 9 320 001

## Description

Le procédé initial d'assemblage par clippage consiste à monter indépendamment les pièces à fixer et les éléments d'assemblage du type agrafe ou clip.
Pour des questions économiques, la production des moyennes et grandes séries, par exemple dans l'industrie automobile, fait de plus en plus appel au montage de sous-ensembles complets, prééquipés de ces éléments d'assemblage.
Si pour un procédé traditionnel d'assemblage, il suffit de fournir des agrafes ou clips , correspondant à des données précises pour un montage unitaire, le cahier des charges des éléments d'assemblage prémontés sur des sous-ensembles impose une multitude de contraintes liées aux besoins des différentes étapes de fabrication des sous-ensembles et des produits finis.

Entre autre, il est demandé:
une aptitude à la distribution automatique, un pouvoir de rattrapage de diverses tolérances de fabrication des pièces à assembler, une aptitude à l'assemblage manuel par faible effort et au montage automatique, tout en garantissant une excellente tenue à l'arrachement, une démontabilité, des baisses de prix, ainsi que des gains de temps de montage et en qualité apportés aux produits finis.

En pratique, il est difficile, voir impossible de satisfaire à l'ensemble de ces exigences avec des éléments d'assemblages traditionnels, conçus essentiellement pour un montage unitaire.

### ART ANTERIEUR ETAT DE LA TECHNIQUE :

*« Il est connu d'utiliser des agrafes circulaires du type bouton pression en forme de douille possédant des languettes d'arrêt, s'emboîtant sur un goujon soudé comportant une tête en forme de champignon pour fixer une baguette d'étanchéité ou un enjoliveur sur un véhicule automobile. Ces moyens sont décrits dans le document DE-U 9 320 001 mais ne répondent pas aux buts que se propose d'atteindre la présente invention. »*

### DESCRIPTION DE L'INVENTION :

A cet effet, l'invention concerne un dispositif d'assemblage conformément à la revendication 1. Ce dispositif permet un assemblage par clippage sur toute une longueur sans que cela entraîne une modification ou altération de son comportement de montage ou de démontage ; caractérisé également en ce qu'il se maintient après l'assemblage dans une position autobloquée dans son logement et sur l'élément d'accrochage.

Selon les modes particuliers de réalisation :
La conception du dispositif d'assemblage selon l'invention permet sa fabrication dans n'importe quelle longueur choisie, de quelques millimètres à quelques centaines de mètres, voir à quelques kilomètres , par formage, par injection plastique, par extrusion etc., en matière caoutchouc, plastique, métalloplastique ou métallique. Le dispositif d'assemblage peut présenter plusieurs côtés ouverts. Sa forme extérieure peut être réalisée en fonction de la forme du logement ; la forme, le nombre et l'angle des lames de ressort peuvent varier en fonction des éléments d'accrochage et du type d'assemblage à réaliser.
D'autres caractéristiques et avantages de la présente invention apparaîtront mieux dans la description détaillée qui suit et se réfère aux dessins annexés donnés à titre d'exemple et non limitatif.

La figure 1 représente en coupe un premier mode de réalisation de l'invention.

La figure 2 représente une coupe de cette variante montée dans le logement d'une pièce clippée sur un élément d'accrochage.

La figure 3 représente cette variante de réalisation lors de son insertion dans le logement de la pièce à fixer.

La figure 4 représente cette variante de réalisation lors de son clippage sur l'élément d'accrochage.

La figure 5 représente cette variante de réalisation vue en perspective.

La figure 6 représente une réalisation du dispositif d'assemblage selon l'état de la technique.

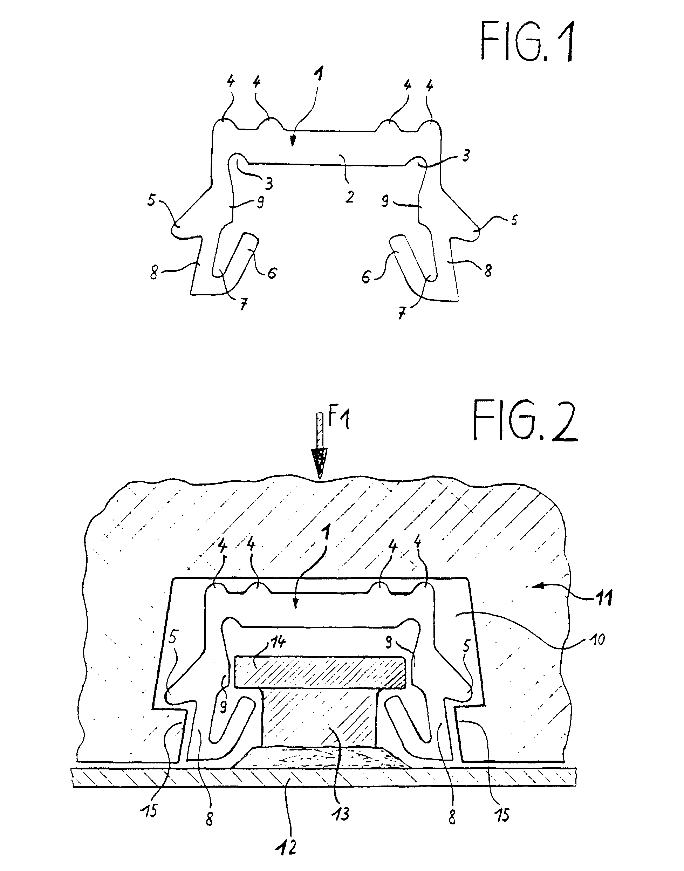

Dans la forme de réalisation selon les figures 1 et 2 , le dispositif d'assemblage est constitué par un élément profilé ouvert (1), cet élément est muni de plusieurs moyens d'ancrage, de manière à pouvoir s'adapter grâce à sa forme intérieure et extérieure à la forme de chaque pièce à assembler (11), (12) ; l'élément profilé est réalisé sensiblement en forme U renversé, de manière à présenter à sa partie supérieure ou base (2) des appuis (4) en partie latérale deux bras (8) munis de renforts extérieurs d'ancrage (5), lesdits bras étant repliés sensiblement obliques, sur eux-mêmes en partie interne du profilé. La base (2) est munie de chaque coté d'une zone de flexibilité (3), autorisant une articulation des bras (8). Les appuis (4) et les renforts d'ancrage (5), permettent de bloquer le dispositif d'assemblage (1), dans le logement (10), d'une pièce (11) a assembler avec une autre pièce (12). La forme du profilé peut être réalisée de façon extrêmement variable tout en conservant des appuis et des renforts.

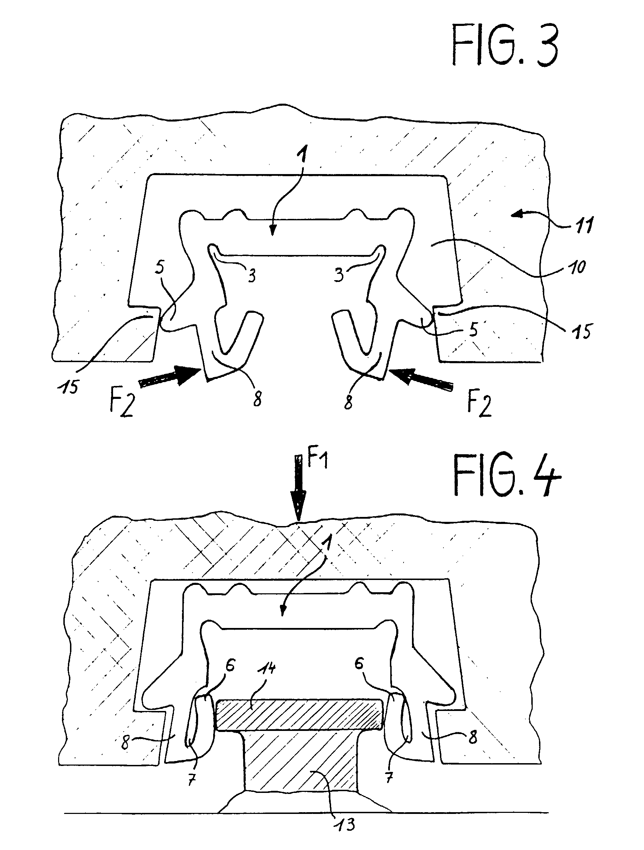

Lors de l'introduction du dispositif d'assemblage (1) dans le logement (10), une force F2, ou un forçage à travers l'étranglement (15) du logement exerce un effort de pliage sur les bras (8) ainsi qu'illustré sur la figure 3.

Suivant l'exemple représenté à la figure 2,les bras (8), une fois passés l'étranglement (15) et sous la tension de pliage au niveau de la zone de flexibilité (3), reviennent dans leur position initiale. Le dispositif d'assemblage (1) se trouve alors maintenu dans le logement (10) entre les renforts d'ancrages (5) et ses appuis (4).
Afin d'être assemblée avec la pièce (12), la pièce (11), prééquipée de son dispositif d'assemblage (1), est positionnée de façon à ce que le dispositif d'assemblage se trouve en face d'un élément d'accrochage (13).
Les bras (8) comportent des lames ressort flexibles (6), dont la forme et l'angle peuvent extrêmement varier par rapport aux bras flexibles (8).

L'élément profilé est muni de butées (9) qui peuvent être de forme variable pour empêcher tout déplacement latéral du dispositif d'assemblage (1) par rapport à l'élément d'accrochage (13), ce qui permet ainsi, en complément des appuis (4), des renforts d'ancrage (5) et des lames de ressort (6), un autoblocage du dispositif entre le logement (10) et l'élément d'accrochage (13).

Comme le montre la figure 4, les lames ressort (6) sous la pression Fl,viennent d'abord en butée sur l'élément d'accrochage (13) et effectuent ensuite un pliage en direction des bras (8), leur point de rotation étant l'articulation (7) située à la base des lames ressort (6) et des bras (8).

De la même manière que le pliage des bras (8) lors de la mise en place du dispositif (1) dans le logement (10),le pliage des lames ressort (6), s'effectue sous la pression F1 qui créée une tension au niveau des articulations (7), cette tension repousse les lames ressort (6) dans leur position initiale, après le passage de la "tête" de l'élément d'accrochage (14).

A ce moment, l'assemblage des pièces (11) et (12) est effectué, conformément à la figure 2. Les lames de ressort (6) se trouvent alors bloquées entre l'élément d'accrochage (13) et les bras (8), tandis que la "tête" de l'élément d'accrochage (14) empêche tout mouvement latéral des butées (9) et des bras (8), ce qui bloque le dispositif d'assemblage (1) dans le logement (10).Ainsi, l'assemblage des pièces (11) et (12) repose sur une position autobloquée du dispositif d'assemblage (1) et ne peut être défait qu'en cas de destruction des lames de ressort (6) ou des renforts d'ancrage (5) ou encore par démontage dans le sens longitudinal du dispositif (1).

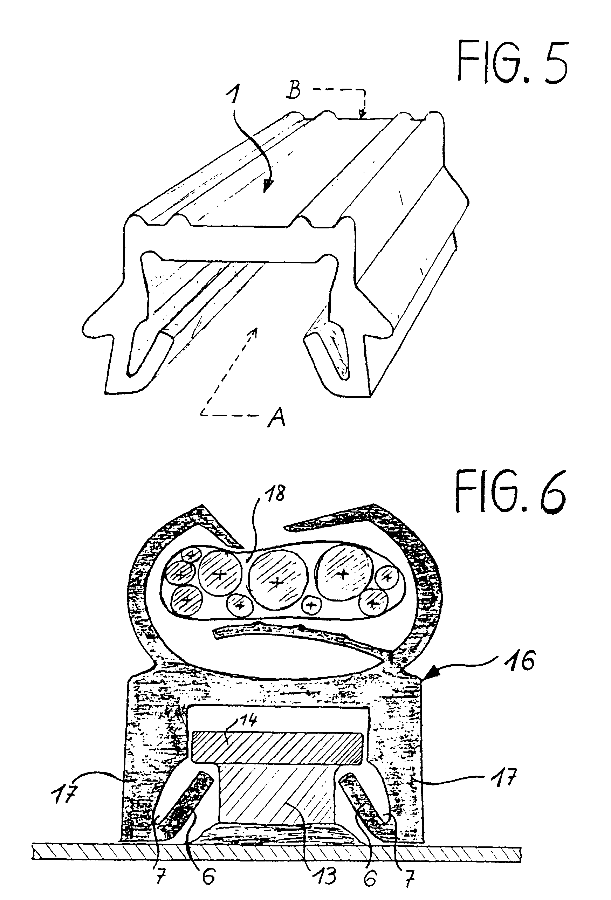

Une variante du dispositif est représentée à la figure 5, dans laquelle le dispositif selon l'invention présente des côtés avant (A) et arrière (B) ouverts, ce qui autorise un démontage dans le sens longitudinal.

Il convient d'ajouter que les appuis (4) et les renforts d'ancrage (5) empêchent, par frottement contre la surface du logement (10), le déplacement intempestif du dispositif d'assemblage (1) lors du transport de la pièce (11), par exemple vers la chaîne de montage du produit fini.

Suivant une autre caractéristique de l'invention, le profilé (1) peu être réalisé dans n'importe quelle longueur souhaitée, celle-ci permettant alors un rattrapage d'importantes tolérances de positionnement des éléments d'accrochage dans le sens longitudinal du dispositif d'assemblage.

Suivant l'état de la technique, les bras latéraux sont réalisés de manière à former des cloisons rigides (17), dans ce cas , le dispositif d'assemblage (1) devient un porteur d'éléments tel que faisceau de câble (18) ou autres. Les cloisons latérales (17) fournissent alors la résistance nécessaire pour autobloquer les lames de ressorts (6) en position d'assemblage, entre l'élément d'accrochage (1) et les cloisons (17).

La figure 6 illustre cette variante du dispositif d'assemblage par clippage (16) clippé également sur un élément d'accrochage (13), mais sa fonction de "porteur" d'un sous ensemble, en l'espèce faisceau de câbles (18), ne nécessite pas d'insertion dans un logement. Les cloisons latérales (17) sont alors rigides et fournissent la résistance nécessaire pour autobloquer les lames de ressort (6), en position d'assemblage entre l'élément d'accrochage (13) et les cloisons (17).

Comme pour la variant du dispositif (1), ce dispositif d'assemblage (16) est démontable ou par destruction des lames de ressort (6) ou des cloisons (17) ou dans son sens longitudinal.

## Revendications

1. Dispositif d'assemblage de pièces par clippage par l'intermédiaire d'un élément profilé, cet élément profilé étant ouvert, et étant muni de plusieurs moyens d'ancrage, de manière à pouvoir s'adapter grâce à sa forme intérieure et extérieure, à la forme de chaque pièce à assembler (11), (12), caractérisé en ce que l'élément profilé est réalisé sensiblement en forme de U renversé, de manière à présenter à sa partie supérieure ou base (2), des appuis (4), et en partie latérale deux bras (8) munis de renforts extérieurs d'ancrage (5), lesdits bras étant repliés sensiblement obliques, sur eux-mêmes en partie interne du profilé.

2. Dispositif d'assemblage de pièces par clippage par l'intermédiaire d'un élément profilé, conforme à la revendication 1, caractérisé en ce que la base (2) est munie de chaque coté d'un affaiblissement (3), autorisant une articulation des bras (8), en ce que les bras (8) sont réalisés de manière à présenter une certaine flexibilité par rapport à sa partie supérieure ou base, obtenue par les affaiblissements des cotés (3).

3. Dispositif d'assemblage de pièces par clippage par l'intermédiaire d'un élément profilé, conforme à l'une quelconque des revendications 1 à 2, caractérisé en ce que les appuis (4) et les renforts d'encrage (5), permettent de bloquer le dispositif d'assemblage (1), dans le logement (10), d'une pièce (11) a assembler avec une autre pièce (12), en ce que la forme du profilé peut être réalisée de façon extrêmement variable tout en conservant ses appuis et ses renforts.

4. Dispositif d'assemblage de pièces par clippage, par l'intermédiaire d'un élément profilé, conforme à l'une quelconque des revendications 1 à 3, caractérisé en ce que, les bras (8) comportent des lames de ressort flexibles (6), dont la forme, le nombre et l'angle peuvent extrêmement varier par rapport aux bras flexibles (8), ceux-ci peuvent être conçus de manière à être réunis entre-eux par un ou plusieurs films.

5. Dispositif d'assemblage de pièces par clippage par l'intermédiaire d'un élément profilé, conforme à l'une quelconque des revendications 1 à 4, caractérisé en ce que, des butées (9) peuvent être de forme variable pour empêcher tout déplacement latéral du dispositif d'assemblage (1) par rapport à l'élément d'accrochage (13), ce qui permet ainsi, en complément des appuis (4), des renforts d'ancrage (5) et des lames de ressort (6), un autoblocage du dispositif entre le logement (10) et l'élément d'accrochage (13).

6. Dispositif d'assemblage de pièces par clippage par l'intermédiaire d'un élément profilé, conforme à l'une quelconque des revendications 1 à 5, caractérisé en ce que, l'élément profilé est réalisé dans n'importe quelle longueur souhaitée, permettant alors un rattrapage d'importantes tolérances de positionnement des éléments d'accrochage dans le sens longitudinal du dispositif d'assemblage.

## Patentansprüche

1. Klippvorrichtung zur Schnellmontage von Teilen mittels eines Profilelements, welches offen und mit mehreren Verankerungen derart ausgestattet ist, dass es sich dank seiner inneren und äusseren Form an die Form eines jeden, der miteinander zu verbindenden Teile (11), (12) anpassen kann, **dadurch gekennzeichnet**, dass dieses Profilelement einem umgekehrten U ähnlich aufgebaut ist, das an seinem oberen Steg, oder Basis (2), mehrere Stützen (4) und seitlich zwei mit äusseren Verankerungs-Verstärkungen (5) ausgestattete Arme (8) aufweist, welche schräg zur Profilinnenseite hin abgewinkelt sind.

2. Klippvorrichtung zur Schnellmontage von Teilen mittels eines Profilelements nach Anspruch 1, **dadurch gekennzeichnet**, dass die Basis (2) auf jeder Seite mit einer Verjüngungszone (3) ausgestattet ist, welche eine Artikulation der Arme (8) erlauben, so dass diese Arme (8) aufgrund ihrer Bauweise und durch die seitlichen Verjüngungszonen (3) eine gewisse Flexibilität gegenüber dem oberen Steg, oder Basis, aufweisen.

3. Klippvorrichtung zur Schnellmontage von Teilen mittels eines Profilelements nach Anspruch 1 oder 2, **dadurch gekennzeichnet**, dass die Stützen (4) und die Verankerungs-Verstärkungen (5) es ermöglichen, das Profilelement (1) in der Aufnahme (10) eines mit einem anderen Teil (12) zu verbindendes Teils (11) zu blockieren, und dass die Form dieses Profilelements extrem variabel gestaltet werden kann, unter Beibehalt seiner Stützen und Verankerungs-Verstärkungen.

4. Klippvorrichtung zur Schnellmontage von Teilen mittels eines Profilelements nach einem der Ansprüche 1 bis 3, **dadurch gekennzeichnet**, dass die Arme (8) mit flexiblen Federlamellen (6) ausgestattet sind, deren Form, Anzahl und Winkel gegenüber den Armen (8) extrem variieren können, und dass es möglich ist, diese so auszulegen, dass sie untereinander durch einen oder mehrere Filmschichten verbunden sind.

5. Klippvorrichtung zur Schnellmontage von Teilen mittels eines Profilelements nach einem der Ansprüche 1 bis 4, **dadurch gekennzeichnet**, dass die Anschläge (9) eine unterschiedliche Form aufweisen können und jegliches seitliche Versetzen des Profilelements (1) gegenüber dem Halteelement (13) verhindern, und dass somit, im Zusammenspiel mit den Stützen (4), den Verankerungs-Verstärkungen (5) und den Federlamellen (6) ein Selbstblockieren des Profilelements (1) zwischen der Aufnahme (10) und dem Halteelement (13) erreicht wird.

6. Klippvorrichtung zur Schnellmontage von Teilen mittels eines Profilelements nach einem der Ansprüche 1 bis 5, **dadurch gekennzeichnet,** dass das Profilelement (1) in jeder gewünschten Länge herstellbar ist, wodurch ein Ausgleich von grossen Positions-Toleranzen des Halteelements (13) in Lägstrichtung des Profilelements ermöglicht wird.

## Claims

1. Device for assembling parts by clipping through the use of a section element which is open, and provided with a plurality of anchoring means so as to be adapted due to its internal and external shape to the shape of each part to be assembled (11,12), **characterized in that** said section element (1) has substantially a reverse U shape so as to present at its upper part or base (2) supports (4), and laterally two arms (8) provided with external anchoring reinforcements (5), said arms being back folded substantially skewed, upon themselves in the internal portion of the section element.

2. Device for assembling parts by clipping through the use of a section element, according to claim 1, **characterized in that** the base (2) is provided at each side with weakening zones (3) authorizing to the arms (8) an articulation, said arms (8) presenting a certain flexibility against the upper part or base (2), due to their realization and the weakening zones (3).

3. Device for assembling parts by clipping through the use of a section element, according to claim 1 or 2, **characterized in that** the supports (4) and the anchoring reinforcements (5) allow to lock the section element (1) in the housing (10) of the part (11) to be assembled with a part (12), and that the shape of the section element can be realized in extremely various way in conserving its supports and anchoring reinforcements.

4. Device for assembling parts by clipping through the use of a section element, according to one of claims 1 to 3, **characterized in that** the arms (8) are provided with flexible leaf springs (6) of which the shape, the number and the angle against the arms (8) can be extremely various, said leaf springs can be realized in a way so as to be connected among themselves by one or a plurality of films.

5. Device for assembling parts by clipping through the use of a section element, according to one of claims 1 to 4, **characterized in that** the abutments (9) can present various shapes so as to prevent the section element (1) from any lateral movement against a couple element (13), in a way that said abutments (9) together with the supports (4), the anchoring reinforcements (5) and the leaf springs (6) produce a self locking of the section element (1) between the housing (10) and a couple element (13).

6. Device for assembling parts by clipping through the use of a section element, according to one of claims 1 to 5, **characterized in that** the section element can be realized in any wanted length so as to make up important position spreading of couple elements in the longitudinal direction of said section element.
